# EUROPEAN PATENT SPECIFICATION

(11) **EP 4 226 116 B1**
(45) Date of publication and mention of the grant of the patent: **25.09.2024**
(21) Application number: 21823838.4
(22) Date of filing: 30.11.2021
(51) Int. Cl.: G01B 7/14, G01D 11/30

(54) **AIRGAP MEASUREMENT IN A GENERATOR OF A WIND TURBINE**
LUFTSPALTMESSUNG IN EINEM GENERATOR EINER WINDTURBINE
MESURE D'ENTREFER DANS UN GÉNÉRATEUR D'ÉOLIENNE

(30) Priority: 09.12.2020 EP 20212662
(43) Date of publication of application: 16.08.2023
(73) Proprietor: Siemens Gamesa Renewable Energy A/S, 7330 Brande (DK)
(72) Inventor: BOCKELMANN, Paul, 20083 Hamburg (DE); GROENDAHL, Erik, 8653 Them (DK); MORGENSTERN, Peter, 29336 Nienhagen (DE); SCHUMKOV, Kirill, 21698 Harsefeld (DE); SCHNEIDER, Thorsten, 27478 Cuxhaven (DE)
(74) Representative: SGRE-Association
(86) International application number: PCT/EP2021/083616
(87) International publication number: WO 2022/122482

(56) References cited:
- EP-A1- 1 870 566
- EP-A1- 1 972 884
- CN-A- 108 418 351
- CN-A- 108 494 174
- DE-A1- 102016 122 862

## Description

### Field of the invention

The invention relates to a method and a device for measuring the airgap between the stator and the rotor of an electric generator. Particularly, but not exclusively, can be applied to an electric generator for a wind turbine.

### Art background

The airgap, which is formed between the stator and a rotor in a wind turbine electric generator is an important design feature that contributes to determines the overall efficiency of the wind turbine. The tighter the airgap is and the less it fluctuates over the lateral surfaces the axial ends of the stator and the rotor, the more energy can be generated and the higher the efficiency is. During the assembly process of the electric generator, it is known to measure the airgap after the pairing between stator and rotor. The airgap has normally a thickness in the range of some millimetres and is therefore not well accessible. Nevertheless, the production must record the values as part of the quality check. Furthermore, the airgap measurement is possibly provided to the customer as a critical quality reference in the future.

This measurement may be performed manually by technicians, who have to crawl into the inside of the stator and use calliper gauges that are applied through radial airducts in the stator segments to measure the airgap. Multiple measurements are performed along the circumference of the generator. This procedure implies a plurality of inconveniences, for example:
- low accuracy of the measurements because the manual application is error prone. The repeatability accounts for a large error in the total measurement,
- low number of measurement points lead to an imprecise measurement of the airgap in height as well as circumference direction,
- long times required for performing the measurement operations.

The document DE102016122862 A1 discloses a method for performing a plurality of measurements in the air gap between a stator and a rotor of a generator for a wind turbine according to the state of the art.

### Summary of the invention

It may be therefore an object of the present invention to provide a method and a device for measuring the airgap between the stator and the rotor of an electric generator, which overcomes the above-mentioned inconveniences of the prior art.

This object may be solved by a method and a device according to the subject matter of the independent claims. Advantageous embodiments of the present invention are described by the dependent claims.

One aspect of the invention relates to a method for performing a plurality of measurements in the air gap between a stator and a rotor of a generator for a wind turbine, the rotor being rotatable with respect to the stator about a rotational axis, the method including the steps of:
mounting a plurality of distance measuring sensors on at least one surface of the stator and/or the rotor, said surface facing the air gap, each distance measuring sensor being distanced from the other distance measuring sensor(s) along rotational axis,
rotating the rotor about the rotational axis,
while rotating the rotor, measuring a plurality of distances between each of said distance measuring sensors (110) and respective facing points across the air gap,
deriving from said plurality of distances one or more value(s) of one or more parameter(s) associated with the air gap and/or the stator and/or rotor,
wherein at least a portion of plurality of distance measuring sensors are fixed to a longitudinal support, said longitudinal support being fixed on a surface of the stator and/or the rotor, said surface facing the air gap, during said step of mounting.

According to possible embodiments of the invention, said one or more parameter(s) associated with the air gap may be any of:
a thickness of the air gap, and/or
a rotor roundness, and/or
a stator roundness, and/or
a rotor concentricity, and/or
a stator concentricity, and/or
distance of the rotor center from a reference position, and/or
distance of the stator center from a reference position.

The present invention permits to achieve the following advantages:
- accuracy of the measurement by reducing the risk of manual application errors and a high degree of repeatability,
- great number of measurement points so that an envelope of the entire airgap can be compiled,
- attaching, measuring and detaching the system requires low manual effort and is faster than current measurements

It is further possible that the nominal airgap may be reduced in turbine generations due to higher confidence of the airgap, due to the above-described measurement procedure. The production can fulfill quality assurance step faster, with higher data accuracy in less manual work (faster process). It also supports to understand assembly factors better how they impact the airgap and thus optimize the assembly to achieve an optimal airgap.

According to a possible embodiment of the invention, said steps of mounting rotating and measuring are first performed with the plurality of distance measuring sensors mounted on one of the stator and rotor and then said steps of mounting rotating and measuring are again performed with the plurality of distance measuring sensors (110) mounted on the other of rotor and stator.

According to another possible embodiment of the invention, in said step of mounting a first plurality of distance measuring sensors are mounted on a first surface of the stator and a second plurality of distance measuring sensors are mounted on a second surface of the rotor, said first and second surfaces facing the air gap.

According to possible embodiments of the invention, at least a portion of plurality of distance measuring sensors are fixed to a longitudinal support, said longitudinal support being fixed on a surface of the stator and/or the rotor, said surface facing the air gap, during said step of mounting.

Another aspect of the invention relates to a measurement device for performing a plurality of measurements in the air gap between a stator and a rotor of a generator for a wind turbine, the measurement device including:
a plurality of distance measuring sensors mounted on a longitudinal support,
a controller connected to the plurality of distance measuring sensors and configured for deriving from a plurality of distances measured by the sensors one or more value(s) of one or more parameter(s) associated with the air gap and/or the stator and/or rotor, when the steps of the measurement method above described are being performed.

According to possible embodiments of the invention, the longitudinal support may be in form of a stick along which the plurality of sensors is attached. The sensors may be regularly distributed along the length of the longitudinal support. The longitudinal support may be oriented during the measurement operations along the rotational axis of the electric generator or inclined with respect thereto of an inclination angle comprised between 0 and 10 degree. Such inclination angle may depend on the geometric constraints of the stator and/or rotor. The longitudinal support with the plurality of sensors may be fixed during the measurement operations to a surface of the stator or to a surface of the rotor, such surfaces of the stator and the rotor facing the airgap. In electric generators where the rotor is radial external to the stator, the longitudinal support with the plurality of sensors may be fixed during the measurement operations to an external surface of the stator or to an internal surface of the rotor. In electric generators where the rotor is radial internal to the stator, the longitudinal support with the plurality of sensors may be fixed during the measurement operations to an external surface of the rotor or to an internal surface of the stator. In permanent magnet electric generators, the longitudinal support with the plurality of sensors may be fixed to one or more magnets facing the airgap.

According to possible embodiments of the invention, the measurement device may include two longitudinal supports to be respectively fixed during the measurement operations to a surface of the stator and to a surface of the rotor, such surfaces of the stator and the rotor facing the airgap.

According to possible embodiments of the invention, the longitudinal support with the plurality of sensors may be fixed at positions, which are radially distanced from the airgap.

According to possible embodiments of the invention, the plurality of distance measuring sensors are capacitive sensors. The sensors may be capacitive film sensors or capacitive flat sensors. The sensors may be capacitive tactile sensor or eddy current sensors.

According to possible embodiments of the invention, the longitudinal support is fixed to the stator or the rotor by means of at least one thread or similar thin material. Each thread may grasp the longitudinal support and extend through a respective air duct of the stator, the thread being tightened in such a way that the longitudinal support is pushed against the external side of the stator. Such embodiments permit a strong fixation of the longitudinal support onto the stator surface. The fixing procedure is characterized by easy handability with tightening, removability without destroying materials and reusability.

According to possible embodiments of the invention, the longitudinal support is fixed to the stator or the rotor by applying un under-pressure between the longitudinal support and a surface of the stator or the rotor facing the air gap, the under-pressure pushing the longitudinal support towards the surface of the stator or the rotor facing the air gap. In such embodiments, the longitudinal support may comprise a channel having an opening to be attached to a surface of the rotor facing the air gap, the measurement device comprising an under-pressure generator to be connected to the channel for evacuating air is activated, air can be evacuated from the opening. Fixing by applying under-pressure allows secure and strong fixation of the longitudinal support onto a rotor surface, e.g. a magnet surface. Removability without destroying materials and reusability can be achieved. A thin design is possible for adapting to the tight space conditions in the airgap.

It should be understood that features, which have individually or in any combination been disclosed for a method for performing a plurality of measurements in the air gap between a stator and a rotor of a generator for a wind turbine, may also, individually or in any combination, be provided for a measurement device according to embodiments of the present invention and vice versa.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic section of a wind turbine including an electric generator.
- Figure 2: shows an exploded view of the stator and rotor of the electric generator of figure 1.
- Figure 3: shows a block diagram illustrating a first embodiment of a measurement method according to the present invention for performing a plurality of measurements in the air gap of the electric generator of figures 1 and 2.
- Figure 4: shows a block diagram illustrating a second embodiment of a measurement method according to the present invention for performing a plurality of measurements in the air gap of the electric generator of figures 1 and 2.
- Figure 5: shows a partial view of an assembly of the stator of the electric generator of figures 1 and 2 and a measurement device according to the present invention.
- Figure 6: shows a partial view of an assembly of the electric generator of figures 1 and 2 and a measurement device according to the present invention.
- Figure 7: shows a step of the measurement method of the present invention illustrating the fixing of the measurement device to the rotor of the electric generator.
- Figure 8: shows a more detailed view of the step of the measurement method of figure 7.
- Figure 9: shows a partial front view of an assembly of the stator of the electric generator of figures 1 and 2, a measurement device according to the present invention and means for fixing the measurement device to the stator.
- Figure 10: shows a rear partial view of the assembly of figure 9.
- Figure 11: shows a partial front view of an assembly of the rotor of the electric generator of figures 1 and 2, a measurement device according to the present invention and means for fixing the measurement device to the rotor.
- Figure 12: shows more in detail the assembly of the rotor of the electric generator of figures 1 and 2 and of the measurement device according to the present invention.
- Figure 13: shows means for fixing the measurement device according to the present invention to the rotor.

### Detailed Description

The illustrations in the drawings are schematic. It is noted that in different figures, similar or identical elements are provided with the same reference signs.

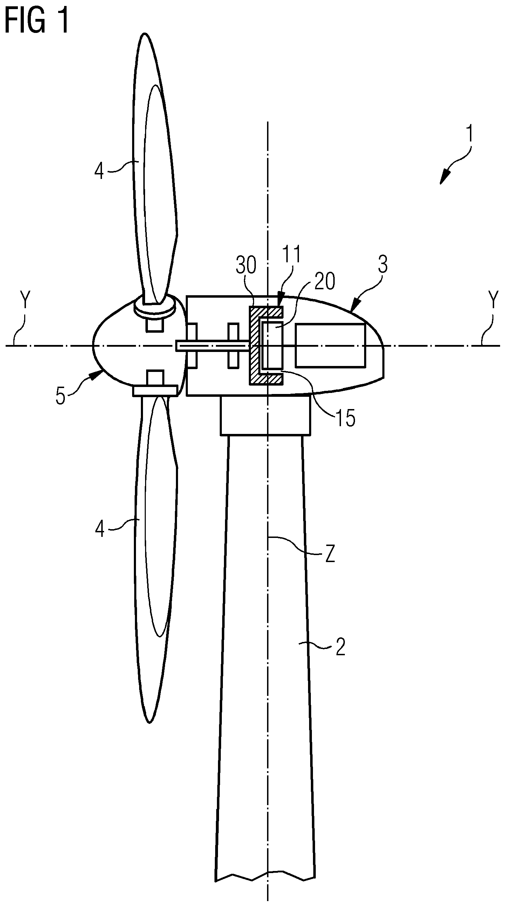

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises at least a wind rotor 5 having a hub and at least one blade 4 (in the embodiment of Figure 1, the wind rotor comprises three blades 4, of which only two blades 4 are visible). The wind rotor 5 is rotatable around a rotational longitudinal axis Y. The blades 4 extend substantially radially with respect to the longitudinal rotational axis Y. In general, when not differently specified, the terms axial, radial and circumferential in the following are made with reference to the longitudinal rotational axis Y. The wind turbine 1 comprises at least one electric generator 11, including a stator 20 and a rotor 30. The rotor 30 is rotatable with respect to the stator 20 about the longitudinal rotational axis Y. The wind rotor 5 is coupled with the rotor 30, in order to rotate about the rotational longitudinal axis Y. The electric generator 11 comprise an airgap 15 radially interposed between the stator 20 and the rotor 30, the airgap 15 extending circumferentially about the rotational axis Y. In the embodiment of the attached figures the rotor 30 is radially external to the stator 20. According to other embodiments (not show), the rotor may be radially internal to the stator.

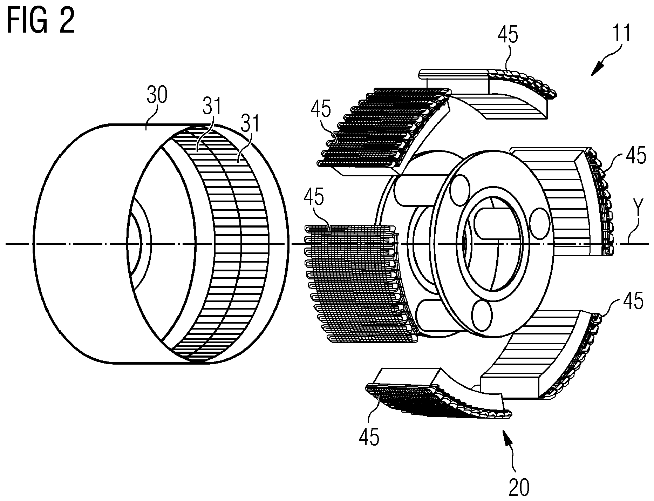

**Figure 2** shows an exploded view of the electrical generator 11 with the rotor 30 and the stator 20. The stator 20 comprises a cylindrical inner core to which six segments 45 are attached. Each segment 45 has a circumferential angular extension of 60°. According to other embodiments of the present invention, the stator 20 comprises a plurality of segments having a number of segments different from six. According to another possible embodiment of the present invention, the stator 20 is not segmented, i.e. the stator includes one single segment covering the entire angular extension of 360°. The rotor 30 has a conventional structure with a plurality of circumferentially distributed rotor permanent magnets 31. The magnets 31 are distributed on an inner side of the rotor 30 according to axial columns. Each column of magnets comprises a plurality of magnets 31 (two magnets 31 in the embodiment of figure 2) aligned along the rotational axis Y.

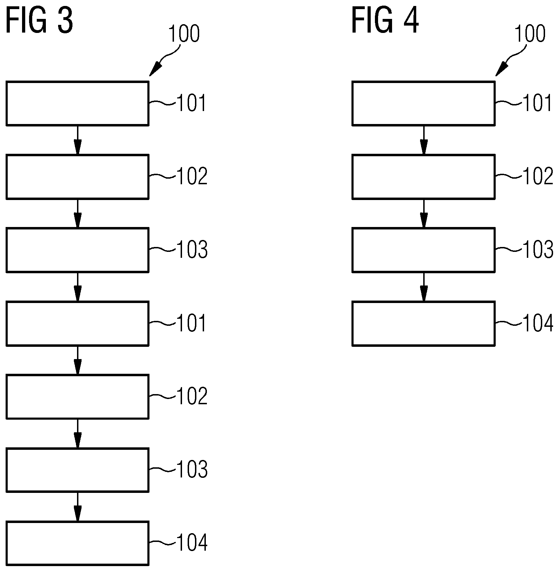

**Figures 3** and **4** show two respective block diagram of a method 100 for performing a plurality of measurements in the air gap 15. Such method may be performed during the manufacturing of the electric generator, for example as quality check.

A method 100 for performing a plurality of measurements in the air gap 15 includes the following steps:
a first step 101 of mounting a plurality of distance measuring sensors 210 on at least one respective surface of the stator 20 and/or the rotor 30. The surface(s) face the air gap 15, each distance measuring sensor 210 being distanced from the other distance measuring sensor(s) 210 along the rotational axis Y,
a second step 102 of rotating the rotor 30 about the rotational axis Y,
a third step 103 of, while rotating the rotor 30, measuring a plurality of distances between each of said distance measuring sensors 210 and respective facing points across the air gap 15,
a fourth step 104 of data analysis for deriving from the plurality of measured distances one or more value(s) of one or more parameter(s) associated with the air gap 15 and/or the stator 20 and/or rotor 30.

Such parameter(s) associated with the air gap 15 may be one or more of:
a thickness of the air gap,
a rotor roundness,
a stator roundness,
a rotor concentricity,
a stator concentricity,
distance of the rotor center from a reference position,
distance of the stator center from a reference position.

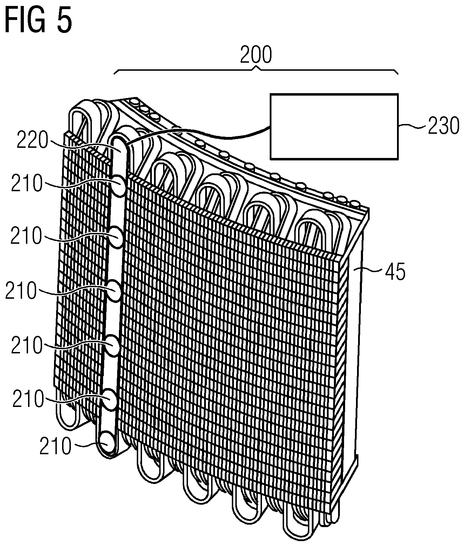

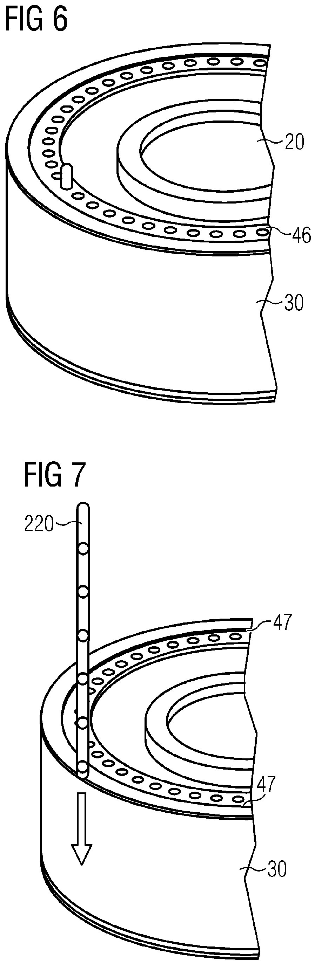

**Figure 3** shows a first embodiment of a block diagram of a method 100. In a first execution of the first step 101, the method 100 comprises mounting a plurality of distance measuring sensors 210 on a surface of the stator 20 facing the air gap 15 (figure 5 and 6). For example, the sensors 210 may be attached to an external surface of a stator segment 45. The plurality of distance measuring sensors 110 may be alternatively mounted on a surface of the rotor 30 facing the air gap 15. The sensors 210 are fixed to the stator 20 or rotor 30 in such a way that each distance measuring sensor 210 is distanced from the other distance measuring sensors 210 along the rotational axis Y. After the first step 101 the rotor 30 and the stator 20 are paired and a break disc 46 (shown in figure 6 and 7) is attached to the generator 11. In a first execution of the second step 102 the method 100 comprises rotating the rotor 30 about the rotational axis Y. A complete rotation of 360 degrees or more may be executed. The rotation of the rotor 30 is initiated and stopped by an external device. In a first execution of the third step 103 of the method 100 comprises, while rotating the rotor 30, measuring a first plurality of distances between each of the distance measuring sensors 210, which has been mounted during the first step 101 of the method, and respective facing points across the air gap 15. After the third step 103 the sensors 210, which have been mounted during the first execution of the first step 101, are removed. The first step 101 of the method 100 is then repeated mounting the same or another plurality of distance measuring sensors 210 on a surface of the rotor 30 facing the air gap 15 (figure 7). For example, the sensors 210 may be attached to the magnets 31. The plurality of distance measuring sensors 110 may be alternatively mounted on a surface of the stator 20 facing the air gap 15, if in the previous execution of the first step 101 distance measuring sensors 210 were mounted on the rotor 30. A second execution of the second step 102 and third step 103 is also performed for measuring a second plurality of distances by means of the distance measuring sensors 210. After the third step 103 the sensors 210, which have been mounted during the second execution of the first step 101, are removed and the final fourth step 104 is performed.

**Figure 4** shows a second embodiment of a block diagram of a method 100. In the first step 101, the method 100 comprises mounting a first plurality of distance measuring sensors 210 on a surface of the stator 20 facing the air gap 15 (figure 5). For example, the sensors 210 may be attached to an external surface of a stator segment 45. The rotor 30 and the stator 20 are then paired. In the first step 101, the method 100 further comprises mounting a second plurality of distance measuring sensors 110 on a surface of the rotor 30 facing the air gap 15. For example, the sensors 210 may be attached to the magnets 31. The sensors 210 are fixed to the stator 20 and rotor 30 in such a way that each distance measuring sensor 210 is distanced from the other distance measuring sensors 210 along the rotational axis Y. After that the break disc 46 is attached to the generator 11. The second step 102 of the method 100 is executed by rotating the rotor 30 about the rotational axis Y. A complete rotation of 360 degrees or more may be executed. The rotation of the rotor 30 is initiated and stopped by an external device. The third step 103 of the method 100 is then executed, while rotating the rotor 30, for measuring a plurality of distances between each of the distance measuring sensors 210, which has been mounted during the first step 101 of the method, and respective facing points across the air gap 15. The plurality of distances measured during the third step 103 includes the measurement performed with the first plurality of sensors 210 and the second plurality of sensors 210 installed during the first step 101. After the third step 103 the sensors 210 are removed and the final fourth step 104 is performed.

**Figure 5** shows the coupling between a plurality of sensors 210 and a segment 45 of the stator 20, performed during the first step 101 of the method 100. The distance measuring sensors 210 are comprised in a measurement device 200, which also includes a longitudinal support 220, for example a stick, on which the sensors 210 are fixed and a controller 230 connected to the plurality of distance measuring sensors 210, for example by means of a cable 240, and configured for performing the steps of the method 100. The measurement device 200 of figure 5 includes six distance measuring sensors 210. According to other embodiments (not shown), the measurement device 200 of figure 5 may include two or more distance measuring sensors 210. The measuring sensors 210 may be capacitive sensors. For example, the measuring sensors 210 may be capacitive film sensors or capacitive flat sensors. According to other embodiments (not shown), the longitudinal support 220 may include one or more cable ties, screws, rubber bands, a knee-lever system or similar. The longitudinal support 220 may be tightened on the outer surface of the segment 45 with any tightening means.

**Figure 6** shows the pairing between the stator 20 and the rotor 30 and the mounting of the break disc 46, performed after the first execution of the step 101 in the first embodiment (figure 3) of the method 100.

**Figure 7** shows the coupling between a plurality of sensors 210 and the rotor 30, performed during the second execution of the first step 101 in the first embodiment (figure 3) of the method 100. The distance measuring sensors 210 are comprised in the same measurement device 200 used during the first execution of the step 101 (fig. 5) or in another measurement device 200. In other to facilitate the coupling between the measuring sensors 210 and the magnets 31, the longitudinal support 220 comprises a metallic material that has low magnetic properties. The length of the longitudinal support 220 may be in the range of some. A correct positioning may therefore require a guide for the longitudinal support 220.

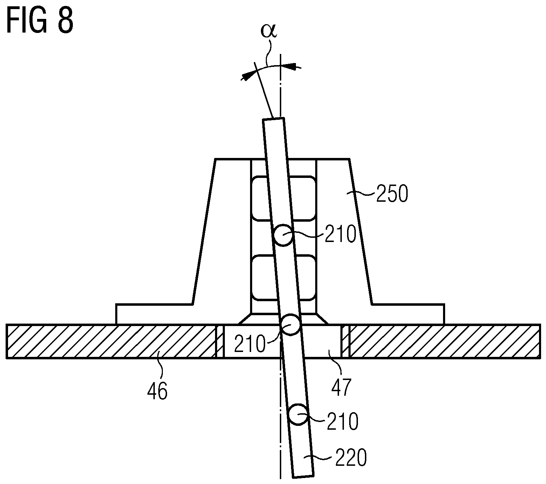

**Figure 8** shows a guide 250 temporarily attached to the break disc 46 for introducing the longitudinal support 220 and the plurality of sensors 210 to be attached to the rotor 30 through an inspection hole 47 of the break disc 46. The longitudinal support 220 is inserted through the guide 250 and the inspection hole 47 of the break disc 46 and mounted on the rotor 30 with an angle of inclination α, which may be comprised between 0 and 10 degrees with respect to the rotational axis Y. the angle of inclination α depends on the geometrical constraints of the assembly including the stator 20 and the rotor 30.

According to other embodiments (not shown), the break disc 46 is not mounted when the longitudinal support 220 is to be coupled to the rotor 30, for example during the first step 101 in the second embodiment (figure 4) of the method 100. In such case another component of the electric generator 11 may be used for mounting the guide 250.

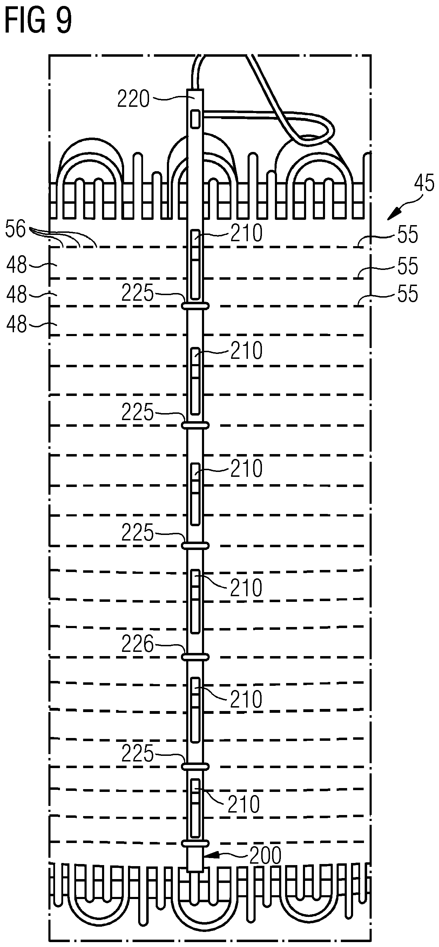

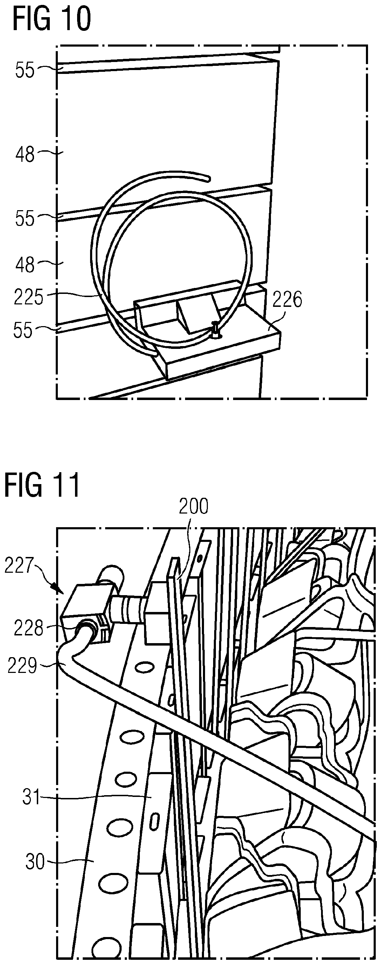

**Figures 9** and **10** show more in detail, with respect to fig. 5, the coupling between a plurality of sensors 210 fixed on the longitudinal support 220 and a segment 45 of the stator 20. The segment 45 comprises a plurality of segment axial portions 48 which are arrayed along the longitudinal or rotational axis Y. The segment axial portions 48 are separated from each other by air ducts 55 for letting a cooling fluid flow in the air duct 55. Each segment axial portion 48 may be formed of a plurality of laminations stacked along the longitudinal axis Y to form the segment 45. At each air duct 55 the lamination stack is discontinued, and a plurality of spacers 56 are provided in the air duct 55 between the two respective and axially adjacent segment axial portions 48. The measurement device 200 comprises one or more threads 225 (six threads 225 in the embodiment shown in fig. 9), each thread 225 extending through a respective air duct 55. The thread 225 grasps the longitudinal support 220 and is tightened in such a way that the longitudinal support 220 is pushed against the external side of the stator segment 45 (fig. 9). On the opposite internal side of stator segment 45 (fig. 10) a respective thread tightener 226 is provided to tighten the thread 225. The thread 225 may be made on nylon or other similar material. According to other embodiments of the invention, threads 225 may be used to to fix the longitudinal support 220 to the rotor 30.

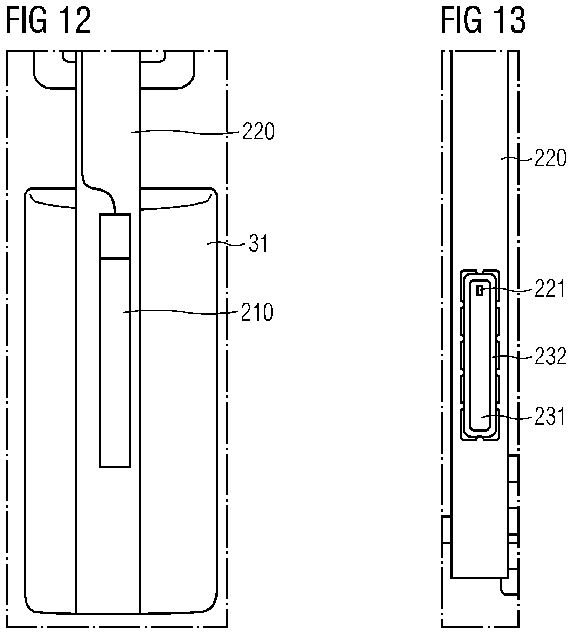

**Figures 11** to **13** show the coupling between a plurality of sensors 210 fixed on the longitudinal support 220 and the rotor 30. An under-pressure is applied to the longitudinal support 220 to fix the longitudinal support 220 on a respective magnet 31. According to other embodiments of the invention, an under-pressure may be applied to the longitudinal support 220 to fix the longitudinal support 220 on a respective surface of the rotor facing the air gap 15. The under-pressure is applied by means of an under-pressure device 227 having an under-pressure generator 228 connected to an air cable 229 (fig. 11). The longitudinal support 220 to be coupled to be attached to the rotor 30 may comprise to such purpose a channel to be coupled to under-pressure generator 228 via the air cable 229, the channel 221 having an opening 231 surrounded by a sealing 232 to be attached to a respective magnet 31. The opening 231 is provided on the surface of the longitudinal support 220 which is subject to contact the magnet 31 in operation (therefore the opening 231 is not visible in Fig. 12, but it is shown in Fig. 13). When the under-pressure generator 228 is activated, air can be evacuated from the opening 231 towards the air cable 229, thus generating the under-pressure which pushes the opening 231 of the longitudinal support 220 towards the respective magnet 31. According to other embodiments of the invention, an under-pressure may be applied to the longitudinal support 220 to fix the longitudinal support 220 to the stator 20.

## Claims

1. A method for performing a plurality of measurements in the air gap (15) between a stator (20) and a rotor (30) of a generator (11) for a wind turbine (1), the rotor (30) being rotatable with respect to the stator (20) about a rotational axis (Y), the method including the steps of:
mounting a plurality of distance measuring sensors (210) on at least one surface of the stator (20) and/or the rotor (30), said surface facing the air gap (15), each distance measuring sensor (210) being distanced from the other distance measuring sensor(s) (210) along the rotational axis (Y),
rotating the rotor (30) about the rotational axis (Y),
while rotating the rotor (30), measuring a plurality of distances between each of said distance measuring sensors (210) and respective facing points across the air gap (15),
deriving from said plurality of distances one or more value(s) of one or more parameter(s) associated with the air gap (15) and/or the stator (20) and/or rotor (30), **characterized in that** at least a portion of plurality of distance measuring sensors (210) are fixed to a longitudinal support (220), said longitudinal support (220) being fixed on a surface of the stator (20) and/or the rotor (30), said surface facing the air gap (15), during said step of mounting.

2. The method according to claim 1, wherein said steps of mounting, rotating and measuring are first performed with the plurality of distance measuring sensors (210) mounted on one of the stator (20) and rotor (30) and then said steps of mounting, rotating and measuring are again performed with the plurality of distance measuring sensors (210) mounted on the other of the rotor (30) and stator (20).

3. The method according to claim 1, wherein in said step of mounting a first plurality of distance measuring sensors (210) are mounted on a first surface of the stator (20) and a second plurality of distance measuring sensors (210) are mounted on a second surface of the rotor (30), said first and second surfaces facing the air gap (15).

4. The method according to claim 1, wherein the longitudinal support (220) is mounted with an angle of inclination (α) comprised between 0 and 10 degrees with respect to the rotational axis (Y).

5. The method according to any of the previous claims, wherein said one or more parameter(s) associated with the air gap (15) is any of:
a thickness of the air gap, and/or
a rotor roundness, and/or
a stator roundness, and/or
a rotor concentricity, and/or
a stator concentricity, and/or
distance of the rotor center from a reference position, and/or
distance of the stator center from a reference position.

6. A measurement device (200) for performing a plurality of measurements in the air gap (15) between a stator (20) and a rotor (30) of a generator (11) for a wind turbine (1), the measurement device (200) including:
a plurality of distance measuring sensors (210) mounted on a longitudinal support (220),
a controller (230) connected to the plurality of distance measuring sensors (210) and configured for deriving from a plurality of distances measured by the sensors (210) one or more value(s) of one or more parameter(s) associated with the air gap (15) and/or the stator (20) and/or rotor (30), when the steps of the method according to any of the previous claims are being performed.

7. The measurement device (200) according to claim 6, wherein the plurality of distance measuring sensors (210) are capacitive sensors.

## Patentansprüche

1. Verfahren zur Durchführung einer Vielzahl von Messungen im Luftspalt (15) zwischen einem Stator (20) und einem Rotor (30) eines Generators (11) für eine Windturbine (1), wobei der Rotor (30) in Bezug auf den Stator (20) um eine Drehachse (Y) drehbar ist, wobei das Verfahren die folgenden Schritte enthält:
Montieren einer Vielzahl von Abstandsmesssensoren (210) auf mindestens einer dem Luftspalt (15) zugewandten Fläche des Stators (20) und/oder des Rotors (30), wobei jeder Abstandsmesssensor (210) von dem/den anderen Abstandsmesssensor(en) (210) entlang der Drehachse (Y) beabstandet ist,
Drehen des Rotors (30) um die Drehachse (Y),
während der Drehung des Rotors (30) Messen einer Vielzahl von Abständen zwischen jedem der Abstandsmesssensoren (210) und jeweils über den Luftspalt (15) gegenüberliegenden Stellen,
Ableiten eines oder mehrerer Werte eines oder mehrerer Parameter, die dem Luftspalt (15) und/oder dem Stator (20) und/oder Rotor (30) zugeordnet sind, aus der Vielzahl von Abständen,
**dadurch gekennzeichnet, dass** mindestens ein Teil einer Vielzahl von Abstandsmesssensoren (210) an einem Längsträger (220) befestigt ist, wobei der Längsträger (220) während des Montageschrittes an einer Oberfläche des Stators (20) und/oder des Rotors (30) befestigt ist, wobei die Oberfläche dem Luftspalt (15) zugewandt ist.

2. Verfahren nach Anspruch 1, wobei die Schritte des Montierens, Drehens und Messens zunächst mit der Vielzahl von Abstandsmesssensoren (210) durchgeführt werden, die an einem des Stators (20) und des Rotors (30) montiert sind, und dann die Schritte des Montierens, Drehens und Messens erneut mit der Vielzahl von Abstandsmesssensoren (210) durchgeführt werden, die an dem anderen des Rotors (30) und des Stators (20) montiert sind.

3. Verfahren nach Anspruch 1, wobei in dem Schritt des Montierens eine erste Vielzahl von Abstandsmesssensoren (210) auf einer ersten Oberfläche des Stators (20) und eine zweite Vielzahl von Abstandsmesssensoren (210) auf einer zweiten Oberfläche des Rotors (30) montiert werden, wobei die erste und die zweite Oberfläche dem Luftspalt (15) zugewandt sind.

4. Verfahren nach Anspruch 1, wobei der Längsträger (220) mit einem Neigungswinkel (α) montiert wird, der zwischen 0 und 10 Grad in Bezug auf die Drehachse (Y) umfasst.

5. Verfahren nach einem der vorhergehenden Ansprüche,
wobei der eine oder die mehreren Parameter, die dem Luftspalt (15) zugeordnet sind, einer der folgenden ist/sind:
eine Dicke des Luftspalts und/oder
eine Rundheit des Rotors und/oder
eine Rundheit des Stators und/oder
eine Rundlaufgenauigkeit des Rotors, und/oder
eine Rundlaufgenauigkeit des Stators, und/oder
Abstand der Rotormitte von einer Bezugsposition, und/oder
Abstand der Statormitte von einer Bezugsposition.

6. Messvorrichtung (200) zur Durchführung einer Vielzahl von Messungen im Luftspalt (15) zwischen einem Stator (20) und einem Rotor (30) eines Generators (11) für eine Windturbine (1), wobei die Messvorrichtung (200) enthält:
eine Vielzahl von Abstandsmesssensoren (210), die auf einem Längsträger (220) montiert sind,
eine Steuervorrichtung (230), die mit der Vielzahl von Abstandsmesssensoren (210) verbunden und dazu ausgelegt ist, aus einer Vielzahl von durch die Sensoren (210) gemessenen Abständen einen oder mehrere Werte eines oder mehrerer Parameter abzuleiten, die dem Luftspalt (15) und/oder dem Stator (20) und/oder dem Rotor (30) zugeordnet sind, wenn die Schritte des Verfahrens nach einem der vorhergehenden Ansprüche durchgeführt werden.

7. Messvorrichtung (200) nach Anspruch 6, wobei die Vielzahl von Abstandsmesssensoren (210) kapazitive Sensoren sind.

## Revendications

1. Procédé pour la réalisation d'une pluralité de mesures dans l'entrefer (15) entre un stator (20) et un rotor (30) d'un générateur (11) pour une éolienne (1), le rotor (30) étant rotatif par rapport au stator (20) autour d'un axe de rotation (Y), le procédé incluant les étapes de :
le montage d'une pluralité de capteurs de mesure de distance (210) sur au moins une surface du stator (20) et/ou du rotor (30), ladite surface étant en regard de l'entrefer (15), chaque capteur de mesure de distance (210) étant à distance de l'autre ou des autres capteur(s) de mesure de distance (210) le long de l'axe de rotation (Y),
la mise en rotation du rotor (30) autour de l'axe de rotation (Y),
tout en mettant en rotation le rotor (30), la mesure d'une pluralité de distances entre chacun desdits capteurs de mesure de distance (210) et des points en regard respectifs de part et d'autre de l'entrefer (15),
la déduction, à partir de ladite pluralité de distances, d'une ou de plusieurs valeur(s) d'un ou de plusieurs paramètre(s) associé(s) à l'entrefer (15) et/ou au stator (20) et/ou au rotor (30),
**caractérisé en ce qu'**au moins une partie de la pluralité de capteurs de mesure de distance (210) sont fixés à un support longitudinal (220), ledit support longitudinal (220) étant fixé sur une surface du stator (20) et/ou du rotor (30), ladite surface étant en regard de l'entrefer (15), pendant ladite étape de montage.

2. Procédé selon la revendication 1, dans lequel lesdites étapes de montage, de rotation et de mesure sont d'abord réalisées avec la pluralité de capteurs de mesure de distance (210) montés sur l'un parmi le stator (20) et le rotor (30), et ensuite, lesdites étapes de montage, de rotation et de mesure sont à nouveau réalisées avec la pluralité de capteurs de mesure de distance (210) montés sur l'autre parmi le rotor (30) et le stator (20).

3. Procédé selon la revendication 1, dans lequel, à ladite étape de montage, une première pluralité de capteurs de mesure de distance (210) sont montés sur une première surface du stator (20) et une seconde pluralité de capteurs de mesure de distance (210) sont montés sur une seconde surface du rotor (30), lesdites première et seconde surfaces étant en regard de l'entrefer (15).

4. Procédé selon la revendication 1, dans lequel le support longitudinal (220) est monté avec un angle d'inclinaison (α) compris entre 0 et 10 degrés par rapport à l'axe de rotation (Y) .

5. Procédé selon l'une quelconque des revendications précédentes, dans lequel ledit un ou lesdits plusieurs paramètre(s) associé(s) à l'entrefer (15) est ou sont l'un quelconque parmi :
une épaisseur de l'entrefer, et/ou
une rondeur de rotor, et/ou
une rondeur de stator, et/ou
une concentricité de rotor, et/ou
une concentricité de stator, et/ou
une distance du centre du rotor par rapport à une position de référence, et/ou
une distance du centre du stator par rapport à une position de référence.

6. Dispositif de mesure (200) pour la réalisation d'une pluralité de mesures dans l'entrefer (15) entre un stator (20) et un rotor (30) d'un générateur (11) pour une éolienne (1), le dispositif de mesure (200) incluant :
une pluralité de capteurs de mesure de distance (210) montés sur un support longitudinal (220),
un dispositif de commande (230) connecté à la pluralité de capteurs de mesure de distance (210) et configuré pour la déduction, à partir d'une pluralité de distances mesurées par les capteurs (210), d'une ou de plusieurs valeur(s) d'un ou de plusieurs paramètre(s) associé(s) à l'entrefer (15) et/ou au stator (20) et/ou au rotor (30), lorsque les étapes du procédé selon l'une quelconque des revendications précédentes sont en cours de réalisation.

7. Dispositif de mesure (200) selon la revendication 6, dans lequel la pluralité de capteurs de mesure de distance (210) sont des capteurs capacitifs.
